# EUROPEAN PATENT APPLICATION

(11) **EP 1 557 393 A2**
(43) Date of publication of application: **27.07.2005**
(21) Application number: 05000661.8
(22) Date of filing: 14.01.2005
(51) Int. Cl.: B66F 9/065

(54) **Lifting vehicle with telescopic arm**

(30) Priority: 23.01.2004 IT MI20040092
(71) Applicant: CTE S.p.A., 38068 Rovereto (Trento) (IT)
(72) Inventor: Cipriani, Claudio, 38068 Rovereto (TN) (IT); Marchiori, Fabrizio, 38068 Rovereto (TN) (IT)
(74) Representative: Marietti, Andrea

(57) **Abstract**

A lift vehicle (1) comprising at least one electrically powered lifting device (101) for a load (5), one or more chargeable batteries (6) for supplying the lifting device, recharging means (10, 12) for said one or more batteries, as well as at least one traction motor (9) of the vehicle. The lift vehicle further comprises auxiliary supplying means (15) for the lifting device and/or recharging means for said one or more batteries, these auxiliary means being connectable to the mains power supply (16).

## Description

The present invention relates to a lift vehicle provided with an electrically powered lood-lifting device and a method for operating the same.

Lift vehicles are known in the art which are provided with one or more load-lifting devices, such as for example an inclinable ramp supporting a conveyor belt and/or an articulated or telescopic arm provided with a loading basket, which are driven by at least one electric motor that, either directly or indirectly, for example by means of a hydraulic pump, allows to lift/lower loads in the order of 10³ Kg, at a few tens of meters from the ground. In the field of lift vehicle for transportation, for example, these lifting devices can allow to lift loads up to 300Kg and more, to a height of at least 30m and at a minimum speed of 46 m/min.

Said electric motor of the lifting device can be directly driven by the traction motor of the vehicle through an AC generator (i.e. an alternator) and the batteries thereof, though it is preferably actuated by a suitable battery pack that can be recharged possibly by the traction motor only after the use of the lifting device has been stopped. This is for the purpose of cutting off the lifting device electric system from the vehicle electric system, thereby preventing one to be forced to overdimension the latter in order to meet the various requirements of both the lifting device and the vehicle.

For example, British Patent Application GB 2.136.750, in the name of POWER LIFTS LTD., describes a lift vehicle in which the load-lifting device can be operated, by means of a hydraulic pump, either by an electric motor powered by a suitable battery pack or directly by the vehicle traction motor. Thus, should the batteries run down before completion of the load-lifting activity, as expected, this activity would be however allowed to continue by operating the vehicle traction motor.

In order to ensure the desired performance in terms of load to be lifted, lifting speed and time of use, the POWER LIFTS lift vehicle necessarily requires to be provided with a suitably sized battery pack such as to be able to operate the lifting device for a long time and without further aids. This entails using a number of high-capacity supplying battery for the lifting device, the batteries being accordingly heavy and large-sized.

Furthermore, the lift vehicle described in patent GB 2.136.750 does not specifically provides using a traction motor to recharge the lifting device batteries, which accordingly require either to be replaced or connected to a suitable recharger that is separated from the vehicle.

Finally, in the event that the lifting device batteries run down before the loading activity has been completed, the POWER LIFTS lift vehicle substantially dictates the use of an internal combustion engine as the energy source for the lifting device, with consequent high noisiness and sensible emission of noxious substances.

Patent Application WO 03/086944, in the name of AB SKF, relates to a fork-lift truck, in which an electromechanical actuator intended to lift/lower the forked platform can be operated by a plurality of batteries and an internal combustion engine, in a hybrid manner. Particularly, the latter can either supply power directly to the platform, or recharge said plurality of batteries.

Similarly to the Application AB SKF, U.S. patent US 6.065.565 (JLG Industries Inc.) teaches to provide a load-lifting device being powered, based on the operation requirements, only by the batteries or by a hybrid system consisting of said batteries and an internal combustion engine.

The vehicle described in the Application AB SKF, as well as the device described in Patent US 6.065.565, does not provide particular measures aimed at restricting the number, size and/or weight of the batteries used to actuate the electromechanical actuator or the lifting device, though it can be inferred that using a hybrid operating system for such actuator (lifting device) may lead to a certain reduction in the number, size and weight of the batteries.

However, the use of an internal combustion engine for actuating the lifting device, though in conjuction with the use of suitable batteries, still leads to high noisiness when the lifting device is used and emission of a sensible amount of polluting substances when loads are lifted/lowered.

Therefore, the need for limiting the size and mostly the weight of the battery pack supplying the electrically powered lifting device, for example in order to reduce the overall dimensions of the lift vehicle, without at the same time being necessarily forced to use a internal combustion engine, does not appear to be effectively met and fulfilled by the above solutions and is accordingly an unsatisfied need in the field of lifting devices.

Particularly, in the specific field of lift vehicles for removals, the need for controlling the weight and size of the supplying battery pack for the lifting device, for the same to be used on vehicles that can be driven without special driving licence, as well as limiting the polluting substances resulting from the use of an internal combustion engine during the loading/unloading activity, these vehicles being used in densely populated urban environments, is very felt by those working in the field.

Accordingly, the object of the present invention is to meet the above requirements by providing a lift vehicle, the lifting device thereof being capable of lifting loads, also important ones, and being operated for a long time, without requiring a heavy and large-sized battery pack and without necessarily requiring to be driven by means of an internal combustion engine.

Another object of the present invention is to provide a small-sized lift vehicle, such as to be driven without requiring a specific driving licence, though having a lifting device that is also adapted of being used for removals, and hence, for example, for lifting loads up to about 300Kg and more, at a height of 30m or more.

A further object of the present invention is to provide an operating method for a load lifting device electrically powered by means of a battery pack, which allows to effectively use the battery pack and the power sources suitable to supply said battery pack and/or the lifting device.

Yet another object is to provide a lifting device resulting very effective and allowing to lift heavy loads (up to 300Kg and more), for a long time, without requiring a large-sized, heavy battery pack or frequent breaks for replacing or completely recharging this battery pack.

These and other objects are achieved by the lift vehicle as claimed in the first independent claim and the subsequent dependent claims, by the lifting device according to the fifteenth independent claim, and the method for operating an electrically powered load lifting device of a lift vehicle according to the eighteenth and twenty-second independent claims and the subsequent relative dependent claims.

The lift vehicle according to the present invention comprises at least one electrically powered load lifting device, one or more rechargeable batteries supplying the lifting device, recharging means for said batteries, as well as at least one traction motor for the vehicle. The lift vehicle also comprises auxiliary supplying means for the lifting device and/or for said recharging means for the batteries, which auxiliary means can be connected to the mains power supply.

The present invention also provides a load lifting device, not necessarily integral with a lift vehicle, which is electrically powered by one or more rechargeable batteries and comprises recharging means for said batteries. This lifting device also comprises auxiliary supply means for the lifting device and/or said recharging means for the batteries, which auxiliary means can be connected to the mains power supply.

Using an easily and commonly available auxiliary power source either for directly supplying the lifting device or recharging the batteries of the lifting device, such as the normal mains power supply, even for domestic use, allows in fact to get a sensible reduction in the size of the battery assembly (battery pack) supplying the lifting device required for lifting loads, because this lifting device can be supplied in a hybrid manner without having to resort to the vehicle traction motor.

Furthermore, using the mains electric power, the latter being constantly delivered, allows to accurately adjust the different steps of hybrid supply and charge of the lifting device batteries - which charge may particularly take place in the dead times during the lifting operations - such that the size and weight of the lifting device battery assembly can be further reduced without necessarily having to operate the vehicle traction motor with subsequent polluting emissions.

In a preferred embodiment of the present invention, furthermore, the traction motor of the lift vehicle is operatively connected to the recharging means for the batteries and/or the lifting device, preferably by means of an AC generator driven by the drive shaft of this traction motor, such as to be a further available power source for recharging the batteries, when the latter have run down, or for hybrid supply for the lifting device, with the batteries and/or the auxiliary means being connected to the mains power supply of the lifting device.

Though entailing a sort of chemical and sound pollution, the fact of being able to use the motor of the vehicle also for supplying the load lifting device or the battery recharging means increases the effectiveness and operating reliability of the vehicle according to the present invention.

According to another aspect of the present invention, there is provided a method for operating an electrically powered load lifting device, being optionally integral with a lift vehicle comprising one or more chargeable batteries for the lifting device, recharging means for said one or more batteries, as well as auxiliary supplying means for the lifting device and/or recharging means for the batteries, these auxiliary means being connectable to a mains power supply. The method provides that, when lifting or lowering the load, the lifting device is powered by said one or more batteries and/or by said auxiliary means connected to the mains power supply, either together or alternatively to each other, according to the lifting operating requirements and to the battery charge level.

Alternatively, in the event that the lifting device is integral with the lift vehicle being provided with at least one traction motor , the method provides that the vehicle traction motor is operatively connected to the recharging means for the batteries and/or to the load lifting device, and that the latter, in the course of the load lifting or lowering steps, can be supplied by one or more of the following power sources, either in a conjoint or disjoint manner: said one or more batteries, the auxiliary means connected to the mains power supply, said vehicle traction motor.

The fact of supplying the lifting device by means of the batteries and the electric power absorbed from the mains power supply, optionally with the aid of the electric power produced by the AC generator connected to the traction motor, in a conjoint manner, allows one to obtain a high performance of the lifting device without having to size the batteries such that the latter can, alone, provide the power and duration required to perform the lifting operations as intended. In fact, in order to use the lift vehicle, it is only necessary that the power and duration required for the intended lifting operation are ensured by the hybrid (combined) supply of the lifting device by two or more of the available power sources being embodied by the batteries, the auxiliary means connected to the mains power supply, and optionally the traction motor of the vehicle.

Furthermore, according to a preferred aspect of the method according to the present invention, during the outage time (i.e. the inactivity time) of the lifting device, which usually coincide with loading/unloading the conveyor belt or lifting platform, the battery recharging means are supplied by at least one of the following power sources: said auxiliary means connected to the mains power supply, and the traction motor of the vehicle.

In this way, the dead times normally existing during lifting or lowering the loads can be used for recharging the batteries that operate the lifting device and accordingly, the power necessary to these operations can be thus made always available.

Several preferred embodiments of the lift vehicle, the lifting device and the method according to the present invention will be now described, by way of non-limiting examples, with reference to the annexed figures, in which:
Figure 1 is an exemplary side view of a generic lift vehicle;
Figure 2 is a functional diagram of a lift vehicle according to a particular aspect of the present invention; and
Figure 3 shows schematic diagrams indicating the charge level of the lifting device batteries and the power absorbed during a virtual load lifting cycle according to a particular aspect of the present invention.

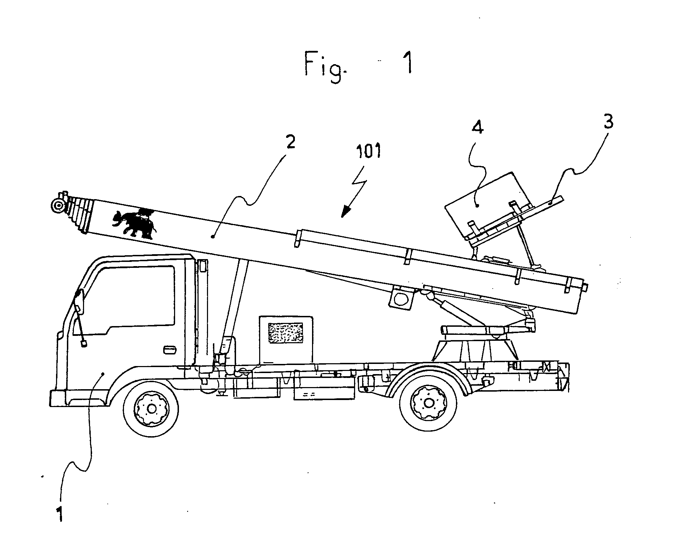

In Figure 1 there is illustrated a generic lift vehicle 1 being provided, according to the prior art, and according to a particular aspect of the present invention, with an electrically powered load lifting device which, in the particular vechicle as illustrated, comprises a telescopic extension ladder 2, being provided with guides for a sliding carriage 3, which carries, in turn, a basket 4 for the load.

The lifting device, which is not limited to the configuration being illustrated in Figure 1, but can obviously have any known configuration, and for example can be either a conveyor belt mounted on an inclined ramp, or a articulated arm, is of a type electrically powered by one or more chargeable batteries.

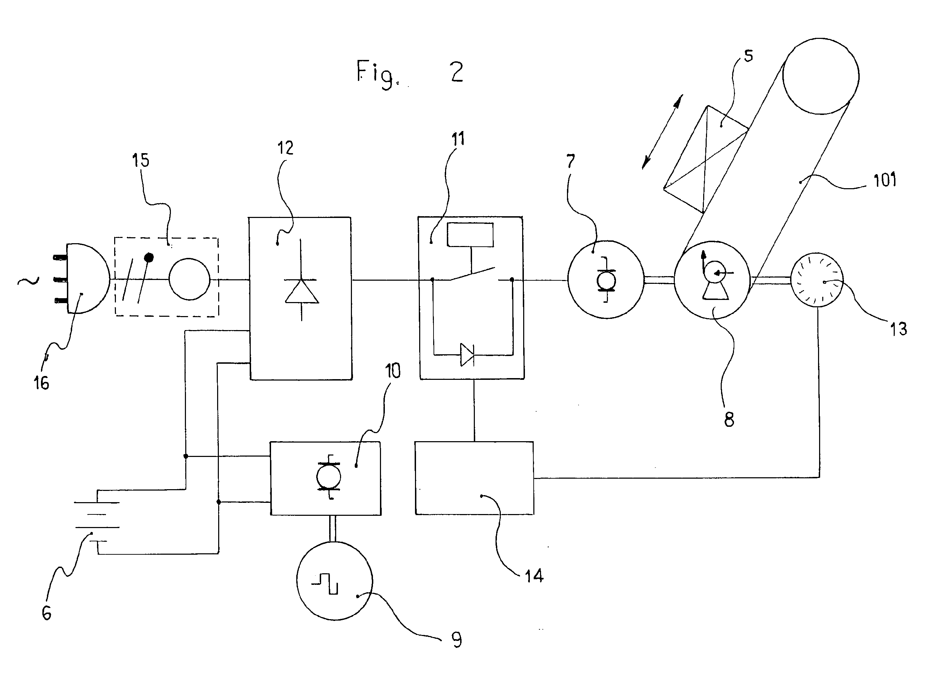

More particularly, with reference to the diagram in Figure 2, according to a preferred aspect of the present invention, the lifting device 101 of a load 5 comprises an electric motor 7 being prepared for driving, either directly or indirectly, the lifting device 101, and which is supplied by one or more batteries 6 dedicated thereto.

In a preferred embodiment of the present invention, the motor 7 is preferably a 48V DC permanent magnet or separately excited electric motor, and drives a hydraulic gear pump 8 which is responsible for the operation of the device 101, and hence for lifting/lowering the load 5. However, without departing from the principles of the present invention, any other electrically powered actuator can be provided alternatively to the motor 7, and also the pump 8 may not be provided or it can be replaced by any other known actuator, which is capable of applying the force being required for lifting the load 5.

The batteries 6, that can be of the type capable of delivering DC power according to the voltage required by motor 7 (for example, with a voltage ranging from 6 to 110V, in the case where the motor 7 or any other actuator operate - as often happens in the art - under voltage ranging from 6V to 110V) are functionally connected to a battery-charger 12, capable of supplying electric power at the required voltage conditions.

Advantageously, according to the present invention, the lifting device 101 and/or the battery-charger 12 are supplied, either in a conjoint or disjoint manner, by auxiliary supplying means 15, which can be connected to the mains power supply 16, for example of the domestic type. The purpose of these auxiliary means 15 is to supply the power required by motor 7, preferably in a conjoint manner with the batteries 6, while lifting/lowering a load 5, and/or provide for battery 6 recharging, during the outage time of the lifting device 101.

The auxiliary means 15, according to a particularly advantageous aspect of the present invention, can be designed to be connected to the mains AC power supply, either single-phase or three-phase, with frequency varying from 50Hz to 60Hz and voltage varying from 110V and 380V. In this case, downstream of the terminals or connection plug to the mains, there can be provided a rectifier and a transformer, being optionally integrated in the battery-charger 12, which are capable to output a DC power with voltage as required by the battery pack 6 and the electric motor 7.

The lift vehicle 1 also comprises a traction motor 9, usually a diesel-type internal combustion engine, which is capable of supplying electric power to the lifting device 101 and/or to the battery charger 12, or directly to the batteries 6, thanks to an AC generator 10, and optionally to a rectifier and to a transformer (not illustrated), such that it is also an auxiliary power supply both for the motor 7, optionally in a conjoint manner with the batteries 6 and/or with said auxiliary supply means 15, and for charging the batteries 6, preferably in a conjoint manner with the auxiliary means 15.

In this way, the traction motor 9 and the AC generator 10 can, if required, contribute to drive the lifting device 101 and/or recharge the batteries 6.

It should be observed that, in the case of a lift vehicle 1 according to the present invention, the AC generator 10 can advantageously charge the batteries 6 while the vehicle 1 is running, such as to use the dead times when the vehicle is being displaced for recharging the batteries 6 operating the lifting device 101.

In the particular embodiment as shown in Figure 2, furthermore, the motor 7 is advantageously adjusted by a controller 11, which is for example a line contactor, a chopper or a device implementing the Soft-Starfi system, which can be programmed due to a Programmable Logic Unit 14 (PLC) being, in turn, operatively connected to a device measuring the lifting speed of the load 5, such as an encoder 13 splined or keyed on the drive shaft of the electric motor 7. The signals indicating the shift speed of the load 5, as being supplied by the encoder 13 to the PLC 14, enable the latter to adjust the controller 11 to the purpose of maintaining an even angular speed of motor 7 upon changing the load 5 applied to the pump 8.

Preferably, in order to meet the specifications required in terms of mass, height and lifting speed, the electric motor 7 of the device 101 can be sized to absorb up to 6KW and the auxiliary means 15 can be designed to absorb not more than 1,5KW from the mains power supply, such that these means 15 can be advantageously connected to a domestic mains power supply 16.

It should be observed that, according to the present invention, in the case where the electrically powered lifting device 101 is not integral with the lift vehicle 1, for example because it is placed on a carriage separate from the latter, this device 101 would comprise, separately from the vehicle 1, at least one battery pack 6 suitable to operate the electric motor 7, or any other equivalent actuator, recharging means 12 for said batteries 6, as well as said auxiliary supplying means 15 for the means 12 and/or motor 7 that can be connected to the mains power supply 16.

While lifting a load, due to the structural design of the lift vehicle 1 and/or the lifting device 101, according to the present invention, the operator can accordingly start the motor 7, or any other equivalent actuator, of the device 101 by using one or more of the following power sources: the batteries 6, said auxiliary means 15 connected to the mains power supply 16 and, when the device 101 is integral with the vehicle 1, the traction motor 9 of the vehicle 1 itself.

Furthermore, during the outage times of the lifting operation, i.e. when the basket 4 is being loaded and unloaded, the presence of auxiliary means 15 being connected to the mains power supply, and optionally the actuation of the traction motor 9 of vehicle 1, enables to readily charge the batteries 6, thanks to the battery-charger 12 and the AC generator 10.

Due to the possibility of employing, either conjointly or disjointly, at least two different power sources for supplying the lifting device 101. i.e. the batteries 6 and the auxiliary means 15, and using during the outage time, said means 15, and optionally the traction motor 9, for recharging the batteries 6, the lifting device ensures a high flexibility of use. In the case where the traction motor 9 of vehicle 1 is also available as a power source, the flexibility and reliability of use of the vehicle according to the present invention will be further improved.

During daily use, the operation of the lifting device 101 and the vehicle 1 can normally be performed according to three different modes.

According to a first mode, if a connection to the mains power supply 16 is not available and/or the load lifting/lowering operation allows it, the motor 7 of the device 101 can be started by being supplied only by the batteries 6 that had been previously charged. This conventional usage mode is restricted only to the life of the batteries 6.

On the other hand, a second, innovative, starting mode provides that the auxiliary means 15 be connected to the mains power supply 16 and contribute both to supply the lifting device 101, during the steps of lifting/lowering the load 5, and to recharge the batteries 6, during the outage time of the lifting device 101, i.e. the loading and unloading steps.

Particularly, with reference to the diagram from Figure 2, during the lifting/lowering steps, the electric power supplied by the auxiliary means 15 supplies, conjointly with the electric power from the batteries 6, the controller 11 of the electric motor 7, which starts the pump 8 for lifting/lowering the load 5. The PLC 14, based on the data supplied thereto by the encoder 13, maintains the shift speed of the load 5 even, by acting on the controller 11. During the outage time of motor 7, the electric power supplied by the auxiliary means 15 allows recharging the batteries 6, thanks to the battery charger 12.

It has been calculated by the Applicant that during a loading, lifting/lowering and unloading cycle, the work time (A) of the lifting device 101, i.e. of the motor 7, is normally equal to about 1/3 of the outage time (I) of the lifting device 101, which is due to the manual operations of mounting and dismounting the load 5 on the device 101. This allows the batteries 6, motor 7 and auxiliary means 15 to be easily sized, such that the conjoint supply of the motor 7 by the batteries 6 and auxiliary means 15 during the work time (A) is sufficient to meet the specific lifting/lowering requirements as desired, and such that, during the outage time (I), the auxiliary means 15 can completely recharge these batteries 6.

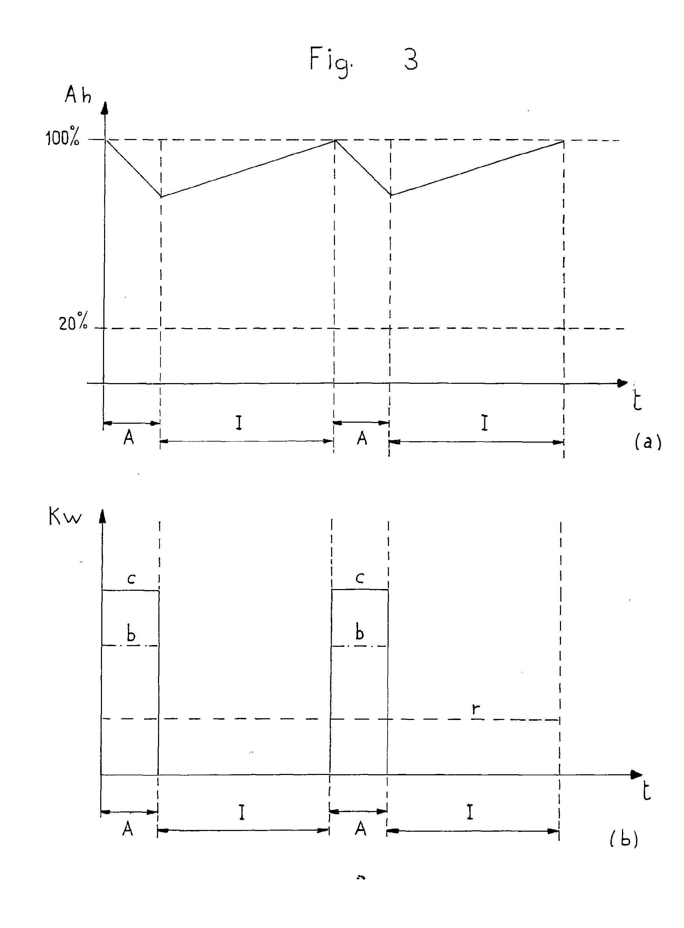

In Figure 3(a) there is illustrated a theoretical diagram showing the charge level (Ah) of the batteries 6 during the work (A) and outage (I) times of the lifting device 101, when the latter is run according to the operating mode described herein. The decrease in the charge of the batteries 6 occurring during the work time (A) of the device 101 is fully compensated by the batteries 6 being charged, by the auxiliary means 15, during the outage time (I).

Figure 3(b) is a theoretical diagram illustrating the power absorption by motor 7 (solid line "c"), and the power delivery by the batteries 6 (point-dot line "b") and the auxiliary means 15 (dotted line "r"), during the work (A) and outage (I) times of the lifting device 101, in the operating mode described above.

The possibility of supplying the lifting device 101 in a hybrid manner and using the outage time (I) of the latter to charge the batteries 6, as provided by the second mode described herein allows to restrict the number, weight and size of the batteries 6, such that a vehicle 1 having a considerably reduced size can be used as the lift vehicle.

Furthermore, this second operating mode allows a virtually unlimited aufionomy of the batteries 6; which autonomy is actually limited only in the event that the outage time (I) is shorter than the theorically set one, which define the size of the batteries 6, motor 7 and means 15 in advance.

The structure of the lift vehicle 1 according to the present invention also allows a third operating mode for the lifting device 101, according to which the traction motor 9 of the vehicle 1 can be started, either conjointly or dislointly, by the auxiliary means 15, in order to supply the motor 7 with the batteries 6, during the work time of the same, and/or to charge the batteries 6 during the outage time of the motor 7.

In this case, despite polluting emissions, the endurance and flexibility of the lift vehicle 1 are extremely high, thereby allowing the hybrid supply of the device 101 and the recharge of the batteries 6 during the outage time, even in the absence of a connection to the mains power supply, and thereby allowing to reduce the number and size of the batteries 6, while maintaining the high performance required from said type of vehicle 1.

The recharge of batteries 6 by the traction motor 9 of the vehicle 1, by means of the AC generator 10, can advantageously be carried out when the vehicle 1 is running, such as to make use of the dead times when the vehicle 1 is being displaced.

It should be observed that, due to an accurate control of the supply lines of the various power sources, many other operating modes of the lifting device are actually feasible, which had been previously neglected as not being immediately feasible or being of poor practical interest. For example, during the work time of the lifting device 101, the latter may be supplied in a hybrid manner by a part of the batteries 6 and the auxiliary means 15, whereas the remaining part of the batteries 6 may be recharged by the traction motor 9 and the AC generator 10 of the vehicle 1. Or rather, still by way of example, the hybrid supply of the lifting device 101 may be conjointly provided by the batteries 6, auxiliary means 15 and traction motor 9 of the vehicle 1.

These further operating modes of the lifting device 101 and vehicle 1, are however to be intended as being contemplated within the scope of protection of the present invention, such as defined in the claims 1 to 23.

Due to the hybrid supply of the lifting device 101 and the recharge of the batteries 6 during the outage time of the same, the present invention thereby allows to restrict the number and size of the batteries 6, without implying a poorer performance by the lifting device than similar lifting devices that do not provide this type of hybrid supply. The use of the auxiliary means 15 being connectable to the mains power supply 16 implies that this hybrid supply does not necessarily provides polluting emission, whether of the sound or chemical type, resulting from an internal combustion engine.

The fact of being able to use, together with said auxiliary means 15, the traction motor 9 of a lift vehicle 1, on which there is integrally positioned the lifting device 101 as a further power source for the latter and recharging means for the batteries 6, increases the flexibility and use autonomy of the lift vehicle 1.

## Claims

1. A lift vehicle (1) of the type comprising at least one electrically powered lifting device (101) for a load (5), one or more rechargeable batteries (6) supplying said lifting device, recharging means (10, 12) for said one or more batteries, as well as at least one traction motor (9) for the vehicle, said lift vehicle being **characterized in that** it comprises auxiliary supplying means (15) for said lifting device and/or for said recharging means for said one or more batteries, said auxiliary means being connectable to the mains power supply (16).

2. The lift vehicle according to claim 1, **characterized in that** said traction motor is operatively connected to said recharging means for said one or more batteries and/or said at least one lifting device.

3. The lift vehicle according to claim 2, **characterized in that** said means for recharging said one or more batteries comprise at least one AC generator (10) that is operated by said at least one traction motor and at least one charger (12) being operatively connected to said auxiliary means.

4. The vehicle according to any preceding claim, **characterized in that** said auxiliary supplying means for said lifting device and/or said recharging means for said one or more batteries are connectable to the mains AC power supply, either single-phase or three-phase, with voltage substantially ranging from 110V to 480V, and frequency substantially ranging from 50Hz to 60Hz.

5. The vehicle according to claim 3 and 4, wherein said charger outputs a direct current with voltage substantially ranging from 6V to 110V.

6. The vehicle according to any claim 1 to 5, **characterized in that** it comprises a programmable controller (14) for operating said lifting device.

7. The vehicle according to claim 6, **characterized in that** said lifting device comprises means (13) for measuring the lifting speed, said means for measuring the lifting speed being operatively connected to said programmable controller.

8. The vehicle according to any preceding claim, **characterized in that** said lifting device comprises at least one electric motor (7).

9. The vehicle according to claim 7 and 8, wherein said means for measuring the lifting speed comprise an encoder (13) splined on the drive shaft of said at least one electric motor.

10. The vehicle according to any claim 8 or 9, wherein said electric motor is supplied with direct current.

11. The vehicle according to claim 8, 9 or 10, wherein said electric motor is a permanent magnet or separately excited motor.

12. The vehicle according to any claim 8 o 11, wherein said electric motor can absorb up to 6 KW.

13. The vehicle according to any claim 8 to 12, wherein said auxiliary means and/or said means for recharging said one or more batteries comprise an AC/DC transformer for supplying said electric motor and/or said means for recharging said one or more batteries.

14. The vehicle according to claim 13, wherein said auxiliary means are prepared to absorbed up to 1,5 KW from the connection to the domestic mains power supply.

15. An electrically powered load lifting device (101), of the type comprising one or more rechargeable batteries (6) for supplying the said device and recharging means (12) for said one or more batteries, **characterized in that** it comprises auxiliary supplying means (15) for said lifting device and/or said recharging means for said one or more batteries, said auxiliary means being connectable to the electric power mains (16).

16. The device according to claim 15, **characterized in that** said lifting device comprises at least one electric motor (7) capable of absorbing up to 6kW.

17. The device according to claim 15 or 16, **characterized in that** auxiliary means are designed to absorb up to 1,5 KW from the connection to the mains power supply.

18. A method for operating an electrically powered load lifting device (101) for loads (5), comprising one or more rechargeable batteries (6) for supplying said lifting device, recharging means (12) for said one or more batteries, and auxiliary supplying means (15) for said lifting device and/or said recharging means for said one or more batteries, said auxiliary means being connectable to the mains power supply (16), the method being **characterized in that**, during lifting or lowering the load, said lifting device is supplied by said one or more batteries and/or said auxiliary means being connected to the mains power supply, either in a conjoint or alternate manner.

19. The method according to claim 18, wherein said lifting device is integral with a lift vehicle (1) being provided with at least one traction motor (9) that is operatively connected to said load lifting device, **characterized in that** during lifting a load, said lifting device is supplied by said traction motor, either in a conjoint or disjoint manner from said one or more batteries and/or said auxiliary means connected to the mains power supply.

20. The method according to claim 18 or 19, **characterized in that**, during outage times of said lifting device, said recharging means for said one or more batteries are supplied by at least one of the following power sources: said auxiliary means connected to the mains power supply, said at least one traction motor of the vehicle.

21. The method according to any claim 18 to 20, **characterized in that**, when a load is being lifted, said auxiliary means are connected to the mains power supply and supply said lifting device and/or said recharging means for said one or more batteries.

22. A method for operating an electrically powered lifting device (101) for loads (5) of a lift vehicle (1), said lift vehicle comprising one or more rechargeable batteries (6) for supplying said lifting device, means (10, 12) for recharging said one or more batteries, at least one traction motor (9) of the vehicle being operatively connected to said recharging means for said one or more batteries and/or said load lifting device, and auxiliary means (15) for supplying said lifting device and/or said recharging means for said one or more batteries, said auxiliary means being connectable to the mains power supply (16), the method being **characterized in that**, during lifting or lowering the load, said lifting device is supplied by one or more of the following power sources, either in a conjoint or disjoint manner to each other: said one or more batteries, said auxiliary means connected to the mains power supply, said at least one traction motor of the vehicle.

23. The method according to claim 22, **characterized in that**, during the outage times of said lifting device, said recharging means for said one or more batteries are supplied by at least one of the following power sources: said auxiliary means connected to the mains power supply, said at least one traction motor of the vehicle.
